(19) Europäisches Patentamt
European Patent Office
Office européen des brevets

(11) **EP 4 162 113 B1**

(12) **EUROPEAN PATENT SPECIFICATION**

(45) Date of publication and mention
of the grant of the patent:
**10.12.2025 Bulletin 2025/50**

(21) Application number: **21821690.1**

(22) Date of filing: **07.06.2021**

(51) International Patent Classification (IPC):
*E02B 7/00* $^{(2006.01)}$         *E02B 8/06* $^{(2006.01)}$
*E02B 9/02* $^{(2006.01)}$         *F03B 11/04* $^{(2006.01)}$
*F03B 13/08* $^{(2006.01)}$        *F03B 15/14* $^{(2006.01)}$
*G05D 9/00* $^{(2006.01)}$         *G05D 9/12* $^{(2006.01)}$
*E02B 9/06* $^{(2006.01)}$

(52) Cooperative Patent Classification (CPC):
**F03B 11/04; E02B 8/06; E02B 9/06; F03B 13/08;
F03B 15/14; G05D 9/12;** F05B 2270/20;
F05B 2270/335; F05B 2270/34; Y02E 10/20

(86) International application number:
**PCT/IB2021/054990**

(87) International publication number:
**WO 2021/250549 (16.12.2021 Gazette 2021/50)**

(54) **SYSTEM AND METHOD FOR CAVITATION REDUCTION USING AN ADJUSTABLE WEIR**

SYSTEM UND VERFAHREN ZUR KAVITATIONSREDUKTION UNTER VERWENDUNG EINES EINSTELLBAREN WEHRS

SYSTÈME ET PROCÉDÉ DE RÉDUCTION DE CAVITATION À L'AIDE D'UN DÉVERSOIR RÉGLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2020 US 202063036057 P**

(43) Date of publication of application:
**12.04.2023 Bulletin 2023/15**

(73) Proprietor: **Canadian Powerplus Corporation
Vancouver, BC V6C 3A8 (CA)**

(72) Inventors:
• **RODRIGUEZ CAMARENA, Mario Eduardo
North York, Ontario M2J 4K3 (CA)**
• **STOUT, Gerald Michael
Hudson's Hope, British Columbia V0C 1V0 (CA)**
• **BEHM, Hans-Christian
Bowen Island, British Columbia V0N 1G0 (CA)**

(74) Representative: **Tiburzi, Andrea et al
Barzanò & Zanardo Roma S.p.A.
Via Piemonte 26
00187 Roma (IT)**

(56) References cited:
CN-A- 110 987 494          CN-U- 202 323 895
DE-A1- 19 513 145          GB-A- 700 320
JP-A- S59 176 469          JP-A- S6 062 315
JP-B2- 4 580 601           KR-Y1- 200 185 645
US-A- 4 674 279            US-A- 5 516 230
US-A1- 2014 018 963        US-A1- 2019 186 458

• CANADIAN POWERPLUS CORPORATION:
"Adjustable Weir Technology for Hydroelectric
Dams - 3D Animation", YOUTUBE, XP055882580,
Retrieved from the Internet <URL:https://www.
youtube.com/watch?v=iWfm9Tyw6xU>

## Description

### TECHNICAL FIELD

The present invention relates to the field of hydroelectric dams and more particularly to systems and methods for maintaining a desired or optimal state of cavitation in a hydraulic turbine and to failsafe systems and methods for maintaining a minimal water level in a tailrace portion of a hydroelectric dam in the case of abnormal functioning.

### BACKGROUND OF THE ART

Dams have been used extensively for a long period of time to restrict the flow of water for different purposes such as irrigation, industrial use, aquaculture or hydropower.

Hydroelectric dams are an efficient source of renewable energy for generating electricity. In most cases, the electricity generated by hydroelectric dams is less expensive than the electricity generated by conventional sources such as coal, gas or nuclear fuels which have a much greater environmental impact.

Hydroelectric dams usually comprise a water turbine combined with a generator located at the bottom of the dam for generating electricity. Water located in a reservoir upstream of the dam is conveyed through an inlet of a standpipe towards a penstock and is delivered to a turbine to generate electricity. After flowing through the turbine water is released into a tailrace portion, downstream of the hydroelectric dam as spent water.

However, one challenge in the operation of a hydroelectric dam is to permanently maintain a minimal water level at the outlet of the dam in order to prevent cavitation which may deteriorate the turbine due to the presence of air or hydrogen gas which has separated from the water in a vacuum condition. Some solutions to this problem have been proposed. For instance, US 9,217,233 describes a system for controllably adjusting spent water levels in the tailrace pool area of a hydroelectric power-generating dam. However, in the case of a power failure, these devices may be unable to adjust the water level at the outlet of the dam, therefore enabling air ingress towards the turbine and causing undesirable cavitation inside the turbine.

Another issue with existing systems is that, although existing systems may be able to monitor cavitation, they do not provide means for controlling or reducing cavitation when cavitation becomes a problem. Typically these systems rely on maintaining a "fixed value" which is selected arbitrarily and therefore introduces sources of inefficiency.

Accordingly, there is a need to ensure a minimal level of water at the outlet of a dam under normal and abnormal conditions. There is particularly a need for a failsafe system adapted to maintain a minimal water level at the outlet of the dam in the case of abnormal functioning such as a power failure.

There is a need for systems and methods to prevent and/or reduce cavitation issues and/or to maintain a desired or optimal state of cavitation in a hydraulic turbine and therefore minimize inefficiency.

There is a need for systems and methods to monitor and control the cavitation state of a turbine and power output by physically manipulating tailwater level, thereby advantageously preventing the formation of cavities beyond an acceptable threshold.

The present invention addresses these needs and other needs as it will be apparent from the review of the disclosure and description of the features of the invention hereinafter.

### SUMMARY

The present invention relates to a failsafe system for maintaining a minimal water level at the tailrace portion, downstream of the hydroelectric dam. The present invention also relates to monitoring and controlling cavitation. The present invention is particularly useful in installations where adjustable weir technology has been applied. The present invention may therefore prevent cavitation on the turbine when the level of water becomes too low at the outlet of the hydroelectric dam.

According to one particular aspect, the invention concerns a system for controlling cavitation in a turbine of a hydroelectric dam, the hydroelectric dam having a tailrace portion and a downstream waterway. In one embodiment the system comprises:

> a) at least one inflatable weir positioned at a location between the tailrace portion of the hydroelectric dam and the downstream waterway of the hydroelectric dam;
> b) a monitoring system configured for monitoring cavitation in said turbine; and
> c) a water level controller configured for communicating with said monitoring system and with said inflatable weir, said water level controller controlling inflation or deflation of the inflatable weir, thereby raising or lowering, respectively, water level in the tailrace portion of the hydroelectric dam ;
>
> wherein the monitoring system feeds the water level controller with a current cavitation state of the turbine, and
> wherein the water level controller inflates the weir when the cavitation state is unsafe cavitation, deflates the weir when the cavitation state is no cavitation, and neither deflates nor inflates the weir when the cavitation state is safe cavitation.

According to another aspect, the invention concerns a system for controlling cavitation in a turbine of a hydroelectric dam, said hydroelectric dam having a tailrace portion and a downstream waterway. In one embodiment the system comprises:

a) at least one storage tank filled with a fluid, said at least one storage tank comprising an outlet;
b) at least one inflatable weir, said at least one inflatable weir being positioned at a location between the tailrace portion and the downstream waterway of the hydroelectric dam, wherein said at least one inflatable weir comprises an inlet fluidly connected to the outlet of the at least one storage tank;
c) a monitoring system configured for monitoring cavitation in said turbine; and
d) a water level controller configured for communicating with said monitoring system, with the storage tank and with the inflatable weir, said water level controller controlling inflation or deflation of the inflatable weir, thereby raising or lowering, respectively, water level in the tailrace portion of the hydroelectric dam;

wherein the monitoring system feeds the water level controller with a current cavitation state of the turbine, and
wherein the water level controller inflates the inflatable weir when the cavitation state is unsafe cavitation, deflates the inflatable weir when the operation state is no cavitation, and neither deflates nor inflates the inflatable weir when the operation state is safe cavitation.

According to another aspect, the invention relates to a method for controlling cavitation in a turbine of a hydroelectric dam, the hydroelectric dam having a tailrace portion and a downstream waterway. In one embodiment the method comprises:

monitoring cavitation in the turbine; and
controlling said cavitation by raising or lowering water level in the tailrace portion of the hydroelectric dam, wherein said controlling comprises inflating or deflating an inflatable weir positioned at a location between the tailrace portion and the downstream waterway of said hydroelectric dam;
wherein controlling cavitation comprises inflating the inflatable weir when a cavitation state is unsafe cavitation, deflating the inflatable weir when a cavitation state is no cavitation, and neither deflating nor inflating the inflatable weir when a cavitation state is safe cavitation.

In another broad aspect, the invention relates to a failsafe system for maintaining a minimal water level in a tailrace portion of a hydroelectric dam. In one embodiment, the failsafe system comprises:

at least one storage tank filled with a fluid, said at least one storage tank comprising an outlet;
at least one inflatable weir, said at least one inflatable weir being positioned at a lower position compared to the storage tank and at a location between the tailrace portion of the hydroelectric dam and a downstream waterway of said hydroelectric dam, wherein said at least one inflatable weir comprises an inlet fluidly connected to the outlet of the at least one storage tank; and
a controllable valve positioned between the outlet of the at least one storage tank and the inlet of the at least one inflatable weir, the controllable valve being maintained in a closed state during normal functioning of the hydroelectric dam,
wherein the controllable valve is configured to be in an open state upon failure of said normal functioning of said hydroelectric dam, wherein failure of normal functioning derives from an interruption of power supply, and
wherein said open state releases fluid from said at least one storage tank to inflate the at least one inflatable weir, thereby retaining water flow in the waterway and maintaining a minimal water level in the tailrace portion of said hydroelectric dam.

In another broad aspect, the invention relates to a method for maintaining a minimal water level in a tailrace portion of a hydroelectric dam. In one embodiment the method comprises:

providing at least one storage tank filled with a fluid, the at least one storage tank comprising an outlet, said outlet being fluidly connected to an inlet of an at least one inflatable weir positioned at a lower position compared to the storage tank and at a location between the tailrace portion of the hydroelectric dam and a downstream waterway of said hydroelectric dam; and
providing a controllable valve positioned between the outlet of the at least one storage tank and the inlet of the at least one inflatable weir;
actively maintaining the controllable valve in a closed state during normal functioning of said hydroelectric dam; and
actuating the controllable valve to an open state upon failure of said normal functioning, wherein failure of normal functioning derives from an interruption of power supply and wherein said actuating to the open state discharges said fluid by gravity and inflates the at least one inflatable weir.

There is also provided an improved system for maintaining a minimal water level in a tailrace portion of a hydroelectric dam. In one particular embodiment the system is for maintaining a minimal water level in a tailrace portion of a hydroelectric dam, the system comprising:

at least one inflatable weir positioned between the tailrace portion of the hydroelectric dam and a downstream waterway of said hydroelectric dam, wherein said at least one inflatable weir comprises an inlet, and wherein the at least one inflatable weir once inflated maintain said minimal water level by retaining water flow in the waterway of the hydroelectric dam;

a failsafe system operatively connected to said at least one inflatable weir, the failsafe system comprising:

at least one storage tank filled with a fluid, the at least one storage tank being located at a higher position compared to the at least one inflatable weir, said at least one storage tank comprising an outlet fluidly connected to said inlet of said at least one inflatable weir; and

a controllable valve located between the outlet of the at least one storage tank and the inlet of the at least one inflatable weir, said controllable valve being maintained in a closed state during normal functioning of the hydroelectric dam, wherein upon failure of said normal functioning, said controllable valve opens and releases the fluid, and wherein said fluid flows by gravity from the at least one storage tank towards the inlet of the at least one inflatable weir, thereby inflating said at least one inflatable weir and maintaining the minimal water level in the tailrace portion of the hydroelectric dam.

Additional aspects, advantages and features of the present invention will become more apparent upon reading of the following non-restrictive description of preferred embodiments which are exemplary and should not be interpreted as limiting the scope of the invention.

## Brief Description Of The Drawings

Having thus generally described the nature of the invention, reference will now be made to the accompanying drawings, showing by way of illustration example embodiments thereof and in which:

**Fig. 1** is a cross-section view of a hydroelectric dam of the prior art wherein an inflatable weir is deflated, in accordance with an embodiment;

**Fig. 2** is a cross-section view of a hydroelectric dam of the prior art wherein an inflatable weir is inflated, in accordance with an embodiment;

**Fig. 3** is a cross-section view of a hydroelectric dam comprising a failsafe system, in accordance with a first embodiment of the present invention;

**Fig. 4** is a top cut away view of a hydroelectric dam comprising a failsafe system, in accordance with a second embodiment of the present invention; and

**Fig. 5** is a flow chart illustrating a method for maintaining a minimal water level in a tailrace portion of the hydroelectric dam using the failsafe system, in accordance with an embodiment of the present invention.

**Fig. 6** is schematic of a system for controlling cavitation in a turbine of a hydroelectric dam in accordance with one embodiment of the present invention.

**Fig. 7** is a flow chart illustrating functioning of a controller in accordance with one embodiment of the present invention.

**Fig. 8** is a flow chart illustrating transitions between operation states and cavitation states, in accordance with one embodiment of the present invention.

## DETAILED DESCRIPTION

In the following description of the embodiments, references to the accompanying drawings are by way of illustration of an example by which the invention may be practiced. It will be understood that other embodiments may be made without departing from the scope of the invention disclosed.

The present invention relates to the field of hydroelectric dams. According to some aspects, the invention relates to systems and methods for controlling cavitation in a turbine of a hydroelectric dam having a tailrace portion and a downstream waterway. According to some other aspects, the invention relates to a failsafe system for maintaining a minimal water level in a tailrace portion of a hydroelectric dam.

As used herein the terms "tailrace portion" refer to the portion, downstream of the hydroelectric dam, of spent water which is released from the hydroelectric dam after the generation of electricity. In accordance with the present disclosure, the tailrace portion is located at a lower level than the water reservoir located upstream of the hydroelectric dam.

## Failsafe system

One particular aspect of the invention concerns a failsafe system to ensure a minimal level of water at the outlet of the dam under normal and abnormal conditions. The failsafe system is particularly adapted to maintain a minimal water level at the outlet of the dam in the case of abnormal functioning, for instance in the case of a power failure.

As used herein the term "normal functioning" refers to the operation of the hydroelectric dam, wherein electrically powered components, such as pumps and computers are in an operative state allowing to controllably inflate or deflate an inflatable weir and adjust the level of water at the outlet of the hydroelectric dam. In embodiments, the term "normal functioning" further refers to actively maintaining a controllable valve in a closed state.

As used herein the terms "abnormal functioning" refers to an operative state, e.g. an electrical power failure, wherein electrically powered components of the hydroelectric dam such as pumps and computers are no longer able to inflate the inflatable weir and adjust the level of water at the outlet of the hydroelectric dam. In embodiments, the term "abnormal functioning" refers to opening the controllable valve to an open state.

As is known, cavitation is the formation of vapor cavities such as air bubbles at low pressure regions which have then been accelerated to high velocities. In the case of rotating elements such as centrifugal pumps, marine propellers or water turbines, cavitation is highly undesirable since it may cause erosion of the rotating element. More precisely, vapor bubbles such as air bubbles are formed near the turbine at low pressure, i.e. when air penetrates towards the power turbine. Once the turbine is rotated at high speed, these air bubbles collide with the blades of the turbine at high pressure, creating shock waves and deteriorating the blades. Cavitation may further cause a great deal of noise and vibration to the rotating element and may reduce the efficiency of the rotating element by the formation of cavitation pits on the blades.

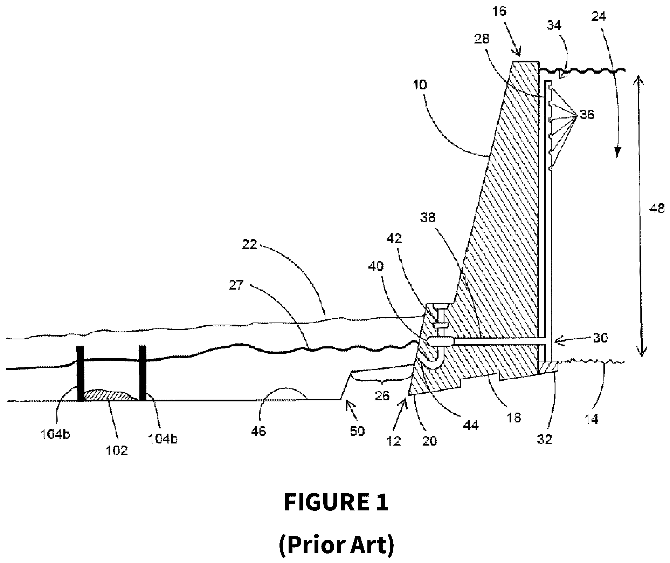

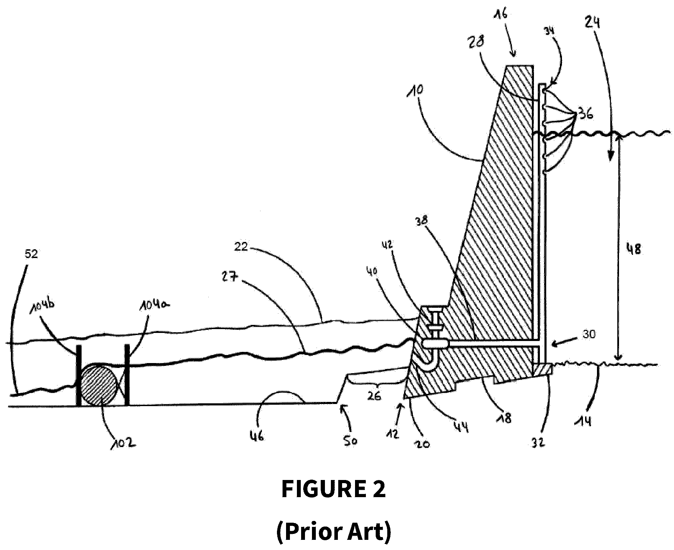

With reference to **Figs. 1** and **2,** an example of an hydroelectric dam is shown. The illustrated hydroelectric dam 10 extends between a lower end 12 positioned within the ground surface 14 of a reservoir 24 and an upper end 16 extending upwardly away therefrom. The lower end 12 of the hydroelectric dam 10 comprises a mid-point keyway 18 and a toe region 20 for providing stability to the hydroelectric dam 10. The hydroelectric dam 10 further extends between opposed river bank 22 and is configured to impede the natural flow of water between a reservoir 24, located upstream of the hydroelectric dam 10, and a tailrace portion 26, located downstream of the hydroelectric dam 10, for generating electricity. The reservoir 24 comprises a water level which is equal to the upper level of the water column 48 and ends with the water level 27 in the tail race 26 pushing back. Although not shown, the reservoir preferably comprises and overflow which drains via a pipe into the tailrace 26.

The hydroelectric dam 10 comprises a standpipe 28, located within the reservoir 24, and extending vertically between a lower portion 30 secured to a support 32 and an upper portion 34. The upper portion 34 comprises a plurality of inlets 36 configured to convey water from the reservoir 24 through a penstock 38 towards a turbine 40 to generate electricity.

In one embodiment, the penstock 38 extends between the lower portion 30 of the standpipe 28 and the turbine 40 and is configured to control the intake water from the reservoir 24 towards the turbine 40. The turbine 40 is further rotated to drive an electricity generator 42 to generate electricity. The generator 42 may further be connected to a transformer (not shown) and connected to power lines (not shown) for conveying the generated electricity to a city, a plant or the like.

Spent water is further discharged from the turbine 40 through an outlet 44 of the hydroelectric dam 10 into the tailrace portion 26 which then flows into a downstream river bed 46 between the river banks 22.

As is known, the generation of electricity is generally governed by the potential energy associated with the difference in height between the water entering the inlets 36 of the standpipe 28 and the level of spent water 27 at the tailrace portion 26. More precisely the weight of the water column 48 conveyed to the turbine 40 is proportional to the amount of electricity generated by the generator 42. For instance, in one case, during high water flow rates, the height of the water column 48 in the reservoir 24 is increased. Therefore, the weight of water acting on the turbine 40 is also increased which increases the generation of electricity at the generator 42. In a second case, during low water flow rates, the height of the water column 48 in the reservoir 24 is reduced. Therefore, the weight of the water acting on the turbine 40 is also reduced which ultimately reduces the generation of electricity by the generator 42.

In the illustrated embodiment, the inlets 36 of the standpipe 28 are located at different vertical heights from the ground surface 14 in order to accommodate different water flow rates in the reservoir 24. This is for instance the case when water flow rates change according to seasonal periods of the year. During high water flow rates, the height of the water column 48 in the reservoir 24 may therefore be greater than the height of the water column 48 in the reservoir 24 during low water flow rates such as during dry conditions or droughts. During low water flow rates, a person skilled in the art will appreciate that water levels in the tailrace portion 26 may drop significantly thereby exposing the outlet 44 of the hydroelectric dam 10. This situation may facilitate the penetration of air or air bubbles through the outlet 44 of the hydroelectric dam 10 towards the turbine 40 and may facilitate the occurrence of cavitation.

An excavation 50 may be formed in the river bed 46, after the tailrace portion 26, to provide an increased height between the water entering the inlets 36 of the standpipe 28 and the level of spent water 27 to fall from outlet 44 of the hydroelectric dam 10 for increasing the generation of electricity by the generator 42.

Still referring to **Figs. 1 and 2,** an inflatable weir 102 is being positioned downstream of the hydroelectric dam 10 adjacent the tailrace portion 26. The inflatable weir 102 is attached to supports 104a and 104b using a tether (not shown).

The inflatable weir 102 may be operated electronically by a control device (not shown) to be selectively inflated or deflated for maximizing the generation of electricity by the generator 42. The inflatable weir 102 may be inflated and deflated depending on the water flow rates. For instance, during periods of high water flow rates, the water column 48 in the reservoir 24 may be increased. The inflatable weir 102 may therefore be selectively deflated for reducing the level of spent water 27 at the tailrace portion 26 and enabling unrestricted flow of water for maximizing the generation of electricity by the generator 42, as shown in **Fig. 1**. In this situation, the inflatable weir 102 is deflated while still preventing the penetration of air through the outlet 44 of the hydroelectric dam 10 towards the turbine 40. On the other hand, during periods of low water flow rates, the water column 48 in the reservoir 24 is reduced. The inflatable weir 102 may therefore be inflated for temporarily impeding the egress of water from the tailrace portion 26 and therefore raising the water level thereof, as shown in **Fig. 2**. The rise of the level of spent water 27 at the tailrace portion 26 prevents air from backing into the outlet 44 towards the turbine 40, thereby preventing cavitation. However, those skilled in these arts will understand that during conditions when the water level in the reservoir 24 declines, as shown in **Fig. 2,** the reduced level of water 52 downstream of the inflatable weir 102, relative to the level of spent water 27 upstream of the inflatable weir 102, will proportionally increase the total height of water acting on the turbine 40 and thereby facilitate increased power generation during such conditions.

The control device (not shown) may be a computer adapted to selectively inflate or deflate the inflatable weir 102. In this embodiment, a water level transmitter (not shown) may be positioned at the tailrace portion 26 and coupled to the computer. The water level transmitter provides feedback indication to the computer on the water level at the tailrace portion 26. By analyzing the data provided by the water level transmitter, the computer may controllably inflate or deflate the weir 102 for maximizing the generation of electricity and preventing cavitation.

A pump (not shown) controlled by the computer may provide liquid or compressed air for inflating the weir 102. Fluids different than compressed air may be possibly used to inflate the weir 102. For instance, water or other liquids may be preferably used because of their incompressibility.

Electricity required to power the computer and the pump may be supplied by the generation of electricity at the generator 42. Alternatively, an on-site power source (not shown), positioned on either one of the river banks 22 may be used to power the computer and the pump. The on-site power source may have any suitable configuration and may use renewable energy such as for example solar energy for powering the computer and the pump.

The inflatable weir 102 may be an inflatable bladder which is inflated using compressed air. Other inflatable devices may also be used such as inflatable bags or balloons.

The inflatable weir 102 may be positioned closer to either one of the river banks 22 and supports 104a and 104b may be attached thereto. The inflatable weir 102 may also be positioned between the river banks 22 and the supports 104a and 104b may be tightly fixed to the river bed 46.

The hydroelectric dam 10 may comprise more than one turbine 40 for increasing the generation of electricity. If so the hydroelectric dam 10 may comprise more than one standpipe 28 for providing an increased amount of water to the turbines. Furthermore, the hydroelectric dam 10 may comprise more than one generator 42 coupled to a respective turbine 40.

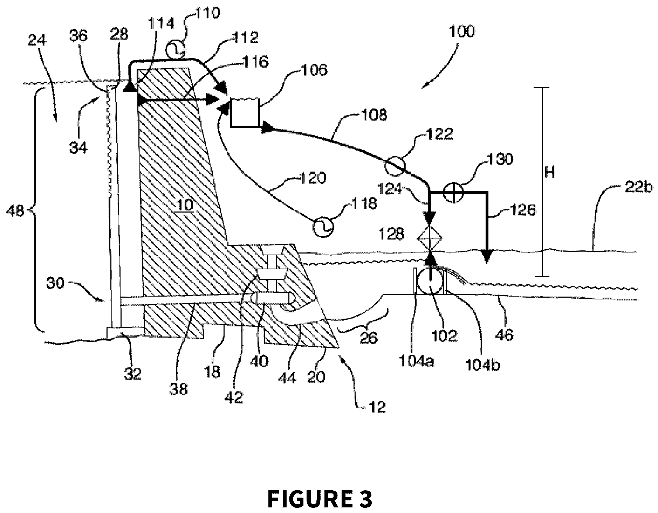

With reference to **Fig. 3,** a failsafe system 100 for maintaining a minimal water level in the tailrace portion 26 of the hydroelectric dam 10 is disclosed. Similar elements disclosed in **Figs. 1 and 2** will bear similar reference numerals in **Fig. 3**.

In one embodiment, the failsafe system 100 comprises a storage tank 106 adapted to be filled with fluid such as water. The storage tank 106 is positioned above the inflatable weir 102 and is fluidly connected thereto using a main pipe line 108. As it will be described in greater details below, upon failure of the normal functioning of the hydroelectric dam 10, fluid from the storage tank 106 is conveyed by gravity through the main pipe line 108 to inflate the weir 102. Accordingly, one advantage of the present invention is that it may rely on the gravitational use of water as a filling medium for weir(s) 102.

In one embodiment, the position and placement of the storage tank 106 relative to the inflatable weir 102 is determined so as to fully inflate the weir 102 using water conveyed by gravity from the storage tank 106. In this situation, the vertical height H between the water level in the storage tank 106 and the inflatable weir 102 provides a sufficient water pressure to inflate the weir 102 by overcoming the pressure of the spent water discharged from the turbine 40 at the outlet 44 of the hydroelectric dam 10 and exerted on the inflatable weir 102.

In one embodiment, the storage tank 106 may be filled with water from the reservoir 24 using a pump 110. In this case, the water is conveyed over the upper end 16 of the hydroelectric dam 10 towards the storage tank 106 via pipe line 112. By placing the storage tank 106 at a lower level than the intake 114 of the pipe line 112, a syphoning effect is created which could function without the aid of the pump 110 for filling the storage tank 106.

In another embodiment, the storage tank 106 may be filled using pipe line 116 extending from the reservoir 24, through the hydroelectric dam 10 to the storage tank 106.

In another embodiment, the storage tank 106 may be filled using a pump 118 for conveying water from the tailrace portion 26 via pipe line 120. In this case, the pump 118 would require on-demand operation for filling the storage tank 106.

In one embodiment, a water level sensor (not shown) monitors the level of water stored in the storage tank 106 for ensuring a sufficient amount of water capable of inflating the weir 102 at its maximum height.

In the illustrated embodiment the failsafe system 100 further comprises a main intake controllable valve 122 adapted to be in an open state during normal functioning of the hydroelectric dam 10 or in a closed state during abnormal functioning of the hydroelectric dam 10 for selectively conveying the water from the storage tank 106 towards the inflatable weir 102. In one embodiment, the main intake controllable valve 122 is positioned at an outlet 107 of the storage tank 106. In another embodiment, the main intake controllable valve 122 is mounted on the main pipe line 108 connecting the storage tank 106 to the inflatable weir 102.

The main pipe line 108 is further split, after the main intake controllable valve 122, into an intake line 124 for conveying the fluid from the storage tank 106 to the inflatable weir 102 and an outlet line 126 for deflating the weir 102. The intake line 124 comprises a pressure or flow monitor 128 mounted thereon for monitoring the inflation of the weir 102. The outlet line 126 comprises an outlet valve 130 mounted thereon and adapted to be in an open or closed configuration for selectively deflating the inflatable weir 102.

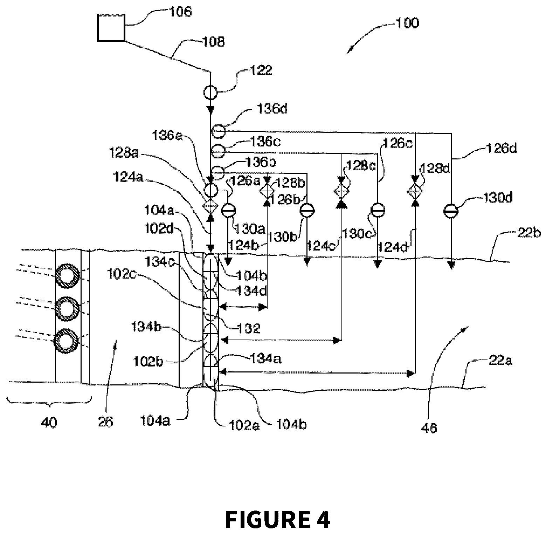

The failsafe system 100 may comprise more than one inflatable weir 102. For instance, and with reference to **Fig. 4,** the failsafe system 100 comprises a plurality of inflatable weirs 102a, 102b, 102c and 102d positioned downstream of the hydroelectric dam 10 adjacent to the tailrace portion 26 thereof. In this embodiment, the inflatable weirs 102a, 102b, 102c and 102d are maintained together using a main tether 132. Further, each inflatable weir 102a, 102b, 102c and 102d is attached to supports 104a and 104b via a respective tether 134a, 134b, 134c and 134d. The supports 104a and 104b are further attached to opposite river banks 22a and 22b. This is for instance the case for supports 104a and 104b of inflatable weirs 102a and 102d, respectively.

As previously explained with regards to inflatable weir 102 of **Figs. 1 and 2,** the inflatable weirs 102a, 102b, 102c and 102d may be electronically and independently operated by respective control devices (not shown) to be selectively inflated or deflated for maximizing the generation of electricity by the generator 42. In this case, the inflatable weirs 102a, 102b, 102c and 102d are inflated and deflated depending on the water flow rates. For instance, during periods of high water flow rates, the water column 48 in the reservoir 24 is increased. The inflatable weirs 102a, 102b, 102c and 102d may therefore be selectively deflated for reducing the level of water at the tailrace portion 26 and enabling unrestricted flow of water for maximizing the generation of electricity by the generator 42. In this situation, the inflatable weirs 102a, 102b, 102c and 102d are deflated while preventing the penetration of air through the outlet 44 of the hydroelectric dam 10 towards the turbine 40. On the other hand, during periods of low water flow rates, the water column 48 in the reservoir 24 is reduced. The inflatable weirs 102a, 102b, 102c and 102d may therefore be inflated for impeding the egress of water from the tailrace portion 26 and raising the water level thereof. The rise of the water level in the tailrace portion 26 prevents air from backing into the turbine 40 through the outlet 44 thereby preventing cavitation.

In one embodiment, the control devices are computers adapted to selectively and independently inflate or deflate each inflatable weir 102a, 102b, 102c and 102d. In this embodiment, water level transmitters (not shown) may be positioned at the tailrace portion 26 and coupled to the computers to provide feedback indications on the water level at the tailrace portion 26. By analyzing the data provided by the water level transmitters, the computers may controllably inflate or deflate their respective weirs 102a, 102b, 102c and 102d for maximizing the generation of electricity and preventing cavitation.

In one embodiment, independent pumps (not shown) are coupled to each computer for inflating a respective inflatable weir 102a, 102b, 102c and 102d. In this embodiment, a liquid or compressed air may be provided for inflating the weirs 102a, 102b, 102c and 102d. In a further embodiment, other fluids different than compressed air may be used to inflate the weirs 102a, 102b, 102c and 102d. For instance, water or other liquids may be preferably used because of their incompressibility.

In one embodiment, the inflatable weirs 102a, 102b, 102c and 102d are configured to span across the river bed 46 between the first river bank 22a and the second river bank 22b, as shown in **Fig. 4.** In another embodiment, the inflatable weirs 102a, 102b, 102c and 102d may span partially across the river bed 46 from either one of the river banks 22a and 22b to a position located between the first and the second river banks 22a and 22b. In another embodiment, the inflatable weirs 102a, 102b, 102c and 102d can be separated from the river banks 22a and 22b. In this configuration, the supports 104a and 104b are tightly fixed to the ground of the river bed 46. Furthermore, different weirs may be positioned at different positions relative to each other. For instance, weirs 102c and 102d could be positioned downstream from weirs 102a and 102b.

As with the single inflatable weir 102 of **Fig. 3,** the plurality of inflatable weirs 102a, 102b, 102c and 102d are configured to be inflated by water stored in the storage tank 106 and conveyed along main pipe line 108 through main intake controllable valve 122 upon failure of the normal functioning of the hydroelectric dam 10.

In one embodiment, the main pipe line 108 is split into a plurality of intake lines and a plurality of outlet lines after the main intake controllable valve 122. For instance, each weir 102a, 102b, 102c and 102d is coupled to a respective intake line 124a, 124b, 124c and 124d. Each intake line 124a, 124b, 124c and 124d is further coupled to a respective inlet valve 136a, 136b, 136c and 136d and to a respective flow or pressure monitor 128a, 128b, 128c and 128d. Further, each weir 102a, 102b, 102c and 102d is coupled to a respective outlet line 126a, 126b, 126c and 126d, branching off from a respective intake line and coupled to a respective outlet valve 130a, 130b, 130c and 130d. Although not shown, the main pipe line 108 and the individual lines 136 preferably comprise a bypass line 111 with a shut-off valve 123.

In an alternative embodiment, more than one storage tank 106 may be used to inflate the inflatable weirs 102a, 102b, 102c and 102d. For instance, each weir 102a, 102b, 102c and 102d may be inflated by a respective storage tank. Therefore, each storage tank will comprise a respective main pipe line and a respective main intake valve for conveying water from the storage tanks to the weirs 102a, 102b, 102c and 102d.

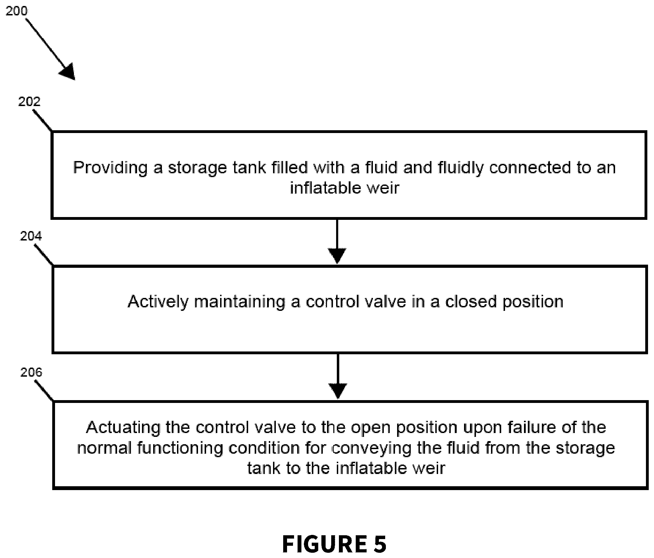

With reference to **Fig. 5,** a method 200 for maintaining a minimal water level in the tailrace portion 26 of the hydroelectric dam 10 is disclosed.

According to step 202, during normal functioning of the hydroelectric dam 10, the storage tank 106 is filled with water from either the reservoir 24 or the tailrace portion 26, as disclosed previously, or from any other source of water. The amount of water stored in the tank 106 is determined via the water level sensor so as to fully inflate the weir 102 by overcoming the pressure of the spent water discharged from the turbine 40 at the outlet 44 of the hydroelectric dam 10 and exerted onto the inflatable weir 102. During the normal functioning of the hydroelectric dam 10, the inflatable weir 102 is electronically operated by the computer by being selectively inflated or deflated via the pump. Seasonal changes may modify the water levels in the tailrace portion 26. The water level transmitter therefore feeds back information to the computer for adjusting the water level in the tailrace portion 26, using the inflatable weir 102, for constantly maximizing the generation of electricity and preventing cavitation.

According to step 204, during the normal functioning of the hydroelectric dam 10, the main intake controllable valve 122 is maintained in a closed state for preventing water from the storage tank 106 from being conveyed to the inflatable weir 102.

In one embodiment, the main intake controllable valve 122 is maintained in a closed state by an electrically powered actuator. For instance, the main intake controllable valve 122 may be a solenoid valve maintained in the closed state as long as the solenoid is electrically powered. Upon loss of electric power, the solenoid may therefore shift to a depowered position therefore moving the main intake controllable valve 122 to an open state.

In one embodiment, the main intake controllable valve 122 is a one-way check valve that prevents water from flowing in an opposite direction. In another embodiment, other electrically powered valves may be considered.

According to step 206, upon failure of the normal functioning of the hydroelectric dam 10 the abnormal functioning of the hydroelectric dam 10 is reached in which the electrical power for powering the electrical components such as the computer and the pump to inflate the weir 102 is lost. This may for instance include power outages, faults at power stations, damage to electric transmission lines, substations or other parts of the distribution system, a short circuit, or the overloading of electricity mains. Further, storms, earthquakes or lightening may damage the on-site power source, thereby causing a failure of the normal functioning of the hydroelectric dam 10. In this situation, the failsafe system 100 provides a manual override for maintaining a minimal water level in the tailrace portion 26 for preventing cavitation at the turbine 40 of the hydroelectric dam 10. The loss of electricity therefore moves the main intake controllable valve 122 from the closed state to the open state. The outlet valve 130 of the outlet line 126 is further closed to prevent water from being released from the weir 102, as shown in **Fig. 3.** Water from the storage tank 106 is therefore conveyed by gravity along the main pipe line 108, through the main intake controllable valve 122, and along the intake line 124 to fully inflate the weir 102. As the weir 102 inflates, the water from the tailrace portion 26 is increasingly retained which raises the water level therein. The raised water level therefore maintains the outlet 44 of the hydroelectric dam 10 submerged and prevents cavitation at the turbine 40.

Once the normal functioning of the hydroelectric dam 10 is restored, the weir 102 may be deflated by opening the outlet valve 130 and closing the main intake controllable valve 122. The pressure exerted by the water in the tailrace portion 26 onto the weir 102 urges the water located in the weir 102 through the intake line 124 and through the outlet line 126 to be discharged, downstream from the weir 102. The weir 102 may further be selectively inflated and deflated via the computer and the pump.

The main intake controllable valve 122 as well as the outlet valve 130 may be manually operated by a technician working on-site at the hydroelectric dam 10 to inflate the weir 102. For instance, upon failure of the normal functioning of the hydroelectric dam 10, and in case of a problem preventing the main intake controllable valve 122 from opening, the technician may physically operate the main intake controllable valve 122 to its open state. In a similar manner, the technician may further physically operate the outlet valve 130 to either the closed or open state depending if the inflatable weir 102 needs to be inflated or deflated using the failsafe system 100.

In one embodiment, the outlet line 126 and the outlet valve 130 is being omitted. In this embodiment, as the normal functioning of the hydroelectric dam 10 is restored, water in the weir 102 is removed using a vacuum pump (not shown) coupled to the inflatable weir 102 and discharged downstream of the inflatable weir 102. The vacuum pump may further convey the water of the weir 102 to the storage tank 106 for a subsequent use.

In one embodiment, the main pipe line 108 as well as the intake line 124 and the outlet line 126 are rigid pipes. In another embodiment, they are flexible tubes.

In one embodiment, the pressure or flow monitor 128 is a digital or analogic display monitor for displaying water pressure in the weir 102. In an alternative embodiment, the pressure or flow monitor 128 is omitted.

In one embodiment, a volume of trapped air in the main pipe line 108, after the main intake controllable valve 122 is used to inflate the weir 102. In this embodiment, upon failure of the normal functioning of the hydroelectric dam 10, the water conveyed from the storage tank 106 towards the weir 102 displaces the volume of trapped air for inflating the weir 102.

In another embodiment, more than one storage tank 106 is used to inflate the inflatable weir 102. In this embodiment, the outlets 107 of each storage tank could be coupled together and further coupled to the main pipe line 108.

A person skilled in the art will understand that a similar method also applies to maintaining a minimal water level in the tailrace portion 26 of the hydroelectric dam 10 wherein the failsafe system 100 comprises a plurality of inflatable weirs 102a, 102b, 102c and 102d, as disclosed in **Fig. 4.** Therefore, during the normal functioning of the hydroelectric dam 10 and according to the variation in water levels, the computers may selectively and independently operate the pumps for independently inflating or deflating the inflatable weirs 102a, 102b, 102c and 102d for maximizing the generation of electricity. As previously disclosed, the storage tank 106 is filled with water from either the reservoir 24, the tailrace portion 26 or from any other source of water. The amount of water stored in the tank 106 is determined so as to fully inflate the weirs 102a, 102b, 102c and 102d by overcoming the pressure of the spent water discharged from the turbine 40 at the outlet 44 of the hydroelectric dam 10 and exerted on the weirs 102a, 102b, 102c and 102d. The main intake controllable valve 122 as well as the inlet valves 136a, 136b, 136c and 136d are operatively maintained in a closed state for preventing water from the storage tank 106 to be conveyed to the inflatable weirs 102a, 102b, 102c and 102d.

In one embodiment and similarly to the main intake controllable valve 122, the inlet valves 136a, 136b, 136c and 136d is maintained in a closed state by a respective electrically powered actuator. For instance, the inlet valves 136a, 136b, 136c and 136d may be solenoid valves maintained in the closed state as long as the solenoid is electrically powered. Upon loss of electric power, the solenoid valves may therefore shift to a depowered position therefore moving the inlet valves 136a, 136b, 136c and 136d to an open state.

Upon failure of the normal functioning of the hydroelectric dam 10, the loss of electrical power prevents components such as the computers and the pumps to operate the inflatable weirs 102a, 102b, 102c and 102d. In this situation, the failsafe system 100 provides a manual override for maintaining a minimal water level in the tailrace portion 26 for preventing cavitation at the turbine 40 of the hydroelectric dam 10. The main intake controllable valve 122 as well as the inlet valves 136a, 136b, 136c and 136d are open. At the same time, the outlet valves 130a, 130b, 130c and 130d of each outlet line 126a, 126b, 126c and 126d are closed to prevent water from being released from each weir 102a, 102b, 102c and 102d, as shown in **Fig. 4.** Water from the storage tank 106 is therefore conveyed by gravity along the main pipe line 108 through the main intake controllable valve 122 and is split into respective intake lines 124a, 124b, 124c and 124d to fully inflate each weir 102a, 102b, 102c and 102d. The water level in the tailrace portion 26 is therefore raised for maintaining the outlet 44 of the hydroelectric dam 10 submerged and preventing cavitation at the turbine 40.

Once the normal functioning of the hydroelectric dam 10 is restored, the weirs 102a, 102b, 102c and 102d may be deflated by opening their respective outlet valves 130a, 130b, 130c and 130d and closing the main intake controllable valve 122. The inlet valves 136a, 136b, 136c and 136d may further be closed. The pressure exerted by the water in the tailrace portion 26 onto the weirs 102a, 102b, 102c and 102d urges the water located therein through the intake lines 124a, 124b, 124c and 124d and through the outlet lines 126a, 126b, 126c and 126d to be discharged, downstream from the weirs 102a, 102b, 102c and 102d. The weirs 102a, 102b, 102c and 102d may therefore be selectively inflated and deflated via the computers and the pumps.

In one embodiment, the main intake valves 122, the inlet valves 136a, 136b, 136c and 136d and the outlet valves 130a, 130b, 130c and 130d is manually operated by a technician working on the hydroelectric dam 10 for inflating the weirs 102a, 102b, 102c and 102d.

In one embodiment, the main pipe line 108 as well as the inlet and outlet lines of the weirs 102a, 102b, 102c and 102d are rigid pipes. Alternatively they could be flexible tubes.

The outlet valves 130a, 130b, 130c and 130d could be omitted. In this embodiment, as the normal functioning of the hydroelectric dam 10 is restored, water in the weirs 102a, 102b, 102c and 102d may be removed using vacuum pumps (not shown) and discharged downstream of the weirs 102a, 102b, 102c and 102d. In a further embodiment, the vacuum pump may further convey the water of the weirs 102a, 102b, 102c and 102d to the storage tank 106 for a subsequent use.

In one embodiment, the main pipe line 108 as well as the intake lines 124a, 124b, 124c and 124d and the outlet lines 126a, 126b, 126c and 126d are rigid pipes. In another embodiment, they could be flexible tubes.

In one embodiment, the pressure or flow monitors 128a, 128b, 128c and 128d are digital or analogic display monitors for displaying water pressure in the weirs 102a, 102b, 102c and 102d. In an alternative embodiment, the pressure or flow monitors 128a, 128b, 128c and 128d may be omitted.

In one embodiment, a volume of trapped air in the main pipe line 108, after the main intake controllable valve 122 is used to inflate the weirs 102a, 102b, 102c and 102d. In this embodiment, upon failure of the normal functioning, the water conveyed from the storage tank 106 towards the weirs 102a, 102b, 102c and 102d displaces the volume of trapped air for inflating the weirs 102a, 102b, 102c and 102d.

In accordance with an additional embodiment, the failsafe system of present invention may be used in combination with a cavitation monitoring system, such as the one described hereinafter. Such cavitation monitoring system preferably continuously assess the cavitation state of the turbine and adjust accordingly the water level in the tailrace portion of the hydroelectric dam, in order to prevent undesirable cavitation. Accordingly, the failsafe system of present invention may further comprises additional components including, but not limited to a monitoring device for monitoring cavitation in the turbine and/or to monitor power output in the turbine, a controller for controlling the weir (e.g. inflating or deflating the weir), one or more sensors (e.g. a high-frequency sensor attached outside the turbine to measure acoustic signals, a sensor to measure turbine efficiency, a sensor to measure turbine effective power, a sensor to measure turbine reactive power, a sensor to measure forebay level, a sensor to measure tailrace level, a sensor to measure pressure upstream of the turbine, a sensor to measure pressure downstream of runner in draft tube, a sensor to measure vibration characteristic values, etc.).

Monitoring and controlling cavitation

As is known, cavitation may occur in hydraulic turbines. Cavitation is undesirable because it typically causes noise, vibration and eventually create damages (Necker J. et al., Cavitation monitoring in hydraulic turbines, published by Voith Hydro Inc., available at www.voith.com). It is therefore preferable to avoid cavitation while operating hydraulic turbines.

According to one particular aspect, the invention concerns systems referred herein as "cavitation control system" or "cavitation monitoring system" and related methods to monitor, prevent and/or reduce cavitation issues and/or to maintain a desired or optimal state of cavitation in a hydraulic turbine. For instance, the inflatable weir 102 of the present invention could be inflated or deflated depending of a desired cavitation state (e.g. no cavitation at all or acceptable incipient cavitation) or to avoid or stop completely any undesirable cavitation (e.g. cavitation or strong cavitation).

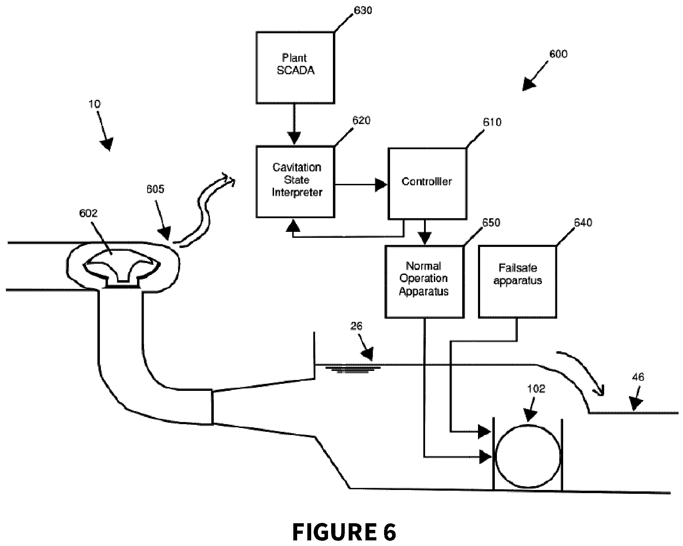

One particular embodiment of a cavitation control system 600 is illustrated in **Figure 6.** As shown, the system comprises an inflatable weir 102 (e.g. an inflatable bladder, an inflatable balloon or an inflatable bag) positioned at a location between the tailrace 26 portion of the hydroelectric dam 10 and the downstream waterway 46 of the hydroelectric dam. The cavitation control system 600 further comprises a monitoring system 605 configured for monitoring cavitation in the turbine, and a water level controller 610 configured for communicating with the monitoring system and with the inflatable weir. The water controller 610 is configured for controlling inflation or deflation of the inflatable weir 102, thereby raising or lowering, respectively, water level in the tailrace portion 26 of the hydroelectric dam.

In embodiments, the cavitation control system 600 comprises a cavitation state interpreter (CSI) 620 and one or more sensors (not shown) for measuring operating data value such as turbine 602 efficiency, turbine effective power, turbine reactive power, forebay level, tailrace level, pressure upstream of the turbine, pressure downstream of runners in the draft tube and vibration characteristic values. These operating data values are referred in the figures as "Plant SCADA" 630. In embodiments, one or more of these aforementioned signals are stored for historical data overtime.

The role of the cavitation control system 600 is to monitor and signals the water level controller 610 at all times the cavitation state of a turbine 602. In turn, the water level controller 610 operates a normal operation apparatus 650 to selectively inflate or deflate the inflatable weir 102, or do nothing if the water level is fine. Accordingly, in embodiments the system 600 further comprises one or more of a controllable pump, and a valve operatively connected to the inflatable weir 102.

As detailed hereinafter, the inflatable weir 102 may also be operatively connected with a fail-safe system or apparatus 640 (e.g. see previous section) such that, in the event of failure of the normal apparatus the failsafe apparatus or system 640 would inflate the weir 102 to elevate the water level in the tailrace 26. Accordingly the cavitation system 600 of the invention may also comprises and/or be operatively connected with structural elements described hereinbefore for the failsafe system including, but not limited to, storage tank filled with a fluid (e.g. water or with compressed air in an amount sufficientto fully inflate the inflatable weir 102).

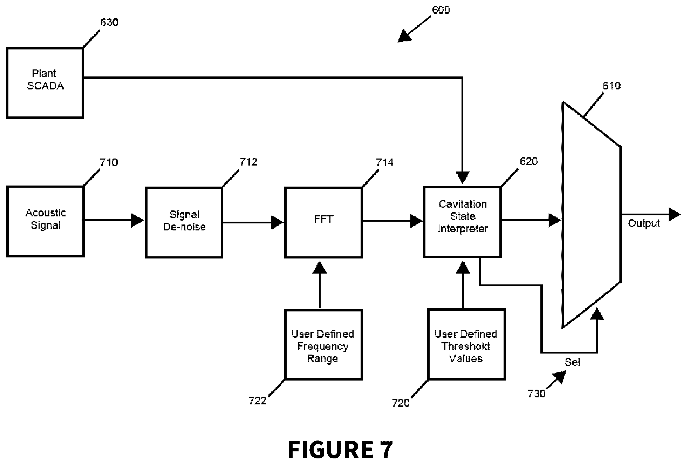

In embodiments, the cavitation state interpreter (CSI) 620 receives operating data value referred in the figures as "Plant SCADA" 630. As illustrated in **Figure 7,** in one preferred embodiment the cavitation state interpreter (CSI) 620 receives multiple separate signals (i.e. Plant SCADA) and also acoustic emissions from the turbine. For instance, at least one high-frequency sensor may be attached outside the turbine to measure acoustic signals 710.

In the illustrated embodiment, the acoustic emissions 710 are de-noised 712 and converted 714 (e.g. FFT as described hereinafter) to the frequency domain where the amplitude of select frequency ranges is compared to a threshold value. Simultaneously, each signal of the Plant SCADA 630 is compared to a threshold value specific to the signal. Similarly, a threshold value can also be assigned to a mathematical operation relating multiple data. For example, the Thoma coefficient (or 'sigma value') is equal to $\sigma = \dfrac{NPSE}{g*H_{net}}$ , and is understood universally to be the "cavitation number' measuring the ratio between NPSE (Net Positive Suction Energy) and hydraulic head. This provides a double verification since even if acoustic emissions do not signal cavitation for any reason, certain solid boundaries will be captured in the Plant SCADA 630 to signal a problem.

In embodiments, the each of the threshold for operating data value and/or the acoustic emissions are manually adjustable 720. For instance, one particular use may select what is acceptable acoustic emissions 710 for one particular turbine and what levels of emission are considered safe and unsafe. This may be assessed for instance by a certain counter which counts the number of times that the amplitude of the acoustic signals has exceeded an acceptable threshold (i.e. the boundary between safe vs unsafe cavitation). Accordingly, one of the advantages of the present invention is to manually or automatically program different tolerances for the counter 722. Likewise, the cavitation system 600 in accordance with the present invention may be further configured for maintaining a desired turbine power output. In embodiments, the CSI 620 is provided with one manually adjustable threshold 720 value for each of the operating data value 630 and/or acoustic emissions (714).

In the embodiment illustrated in **Figure 7,** the cavitation control system 600 uses Fast Fourier Transform (FFT) mathematical operations 714 to convert signal waveforms from the acoustic signal 710 into their equivalent representations in the frequency domain for the CSI 620.

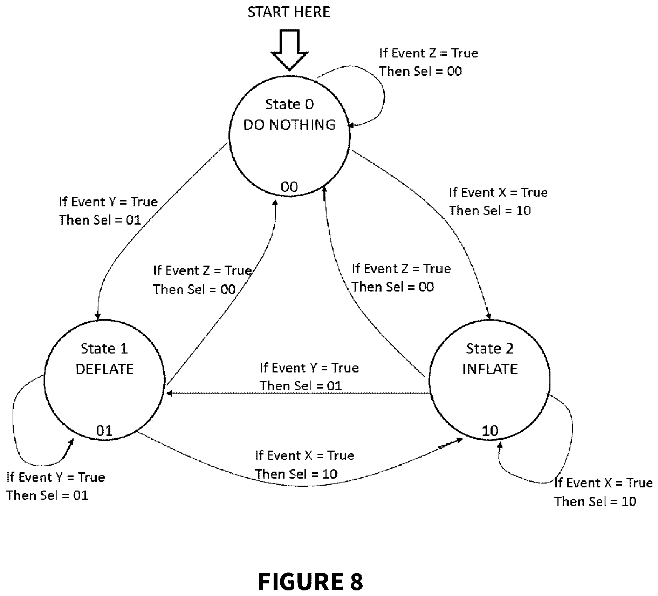

In the embodiment illustrated in **Figure 7,** and more specifically in **Figure 8,** the cavitation state interpreter 620 informs the controller what to output, which is either, INFLATE 810, or DEFLATE 820, or DO NOTHING 830. Therefore, the cavitation state interpreter 620 send a "select" signal or "Sel" 730 that indicates to the water controller 610 which action to output. For example, if there is no cavitation, the CSI outputs Sel = 00, which causes the water controller to DEFLATE. If there is unsafe cavitation, the CSI outputs Sel = 10, which causes the water controller to INFLATE. If there is no cavitation, the CSI outputs Sel =01, which causes the water controller to DO NOTHING (the output Sel = 11 in this case does not exist - there are only 3 states).

**Figure 8** illustrates more specifically transitions between these three states, in accordance with a preferred embodiment. In this figure: Event X is true when amplitude of acoustic signals exceeds threshold AND operating data suggests unsafe operation; Event Y is True when amplitude of acoustic signals does NOT exceed the threshold; and Event Z is true when amplitude of acoustic signals exceeds the threshold AND operating data suggests safe operation.

In accordance with the present invention, the cavitation control system preferably checks the state of the turbine every time interval 't'. The time interval may be selected based on the proximity of the adjustable weir to the powerplant. If the adjustable weir is very far, then it takes a long time for water levels to change based on weir inflation. Conversely, if the adjustable weir is very close, then it takes little time for water levels to change based on weir inflation. Every time interval 't', one of the 3 events must be true - and therefore Sel is updated accordingly.

In one embodiment the cavitation control system further comprises one or more of a set of high-frequency sensors and amplifiers, a high-speed data acquisition and signal processing unit as well as an analysis software module. The sensor(s) could be attached outside the turbine. The software could calculate required characteristic values based on the acoustic emissions and additional machine data like rotational speed, water level, etc. and provide the cavitation state of the turbine during operation. The cavitation state would be provided to the water controller which is responsible to selectively inflate or deflate the inflatable weir for raising or lowering the water level in the tailrace portion of the hydroelectric dam. Different devices and apparatus to measure and monitor may be used in accordance with the present invention, for instance those commercialized by Kistler (Switzerland) and by Voith Hydro Inc. (Germany).

According to the present invention, it is important to maintain a minimal desired level of water in the tailrace portion at all times by permanently maintaining a minimal level of water at an outlet of the hydroelectric dam to prevent occurrence of cavitation at a turbine. Therefore, the present invention provides a failsafe system assisting in preventing occurrence of cavitation in case of abnormal functioning. As explained hereinbefore, the failsafe system is in a "standby mode" during normal functioning of the hydroelectric dam and it switches to an "activated mode" upon occurrence of an abnormal functioning.

The embodiments described above are intended to be exemplary only. The scope of the invention is therefore intended to be limited solely by the appended claims.

**Claims**

1. A system (600) for controlling cavitation in a turbine (40) of a hydroelectric dam (10), said hydroelectric dam having a tailrace portion (26) and a downstream waterway (46), the system comprising:

   a) at least one inflatable weir (102) positioned at a location between the tailrace portion (26) of the hydroelectric dam (10) and the downstream waterway (46) of the hydroelectric dam;
   b) a monitoring system (605) configured for monitoring cavitation in said turbine (40); and
   c) a water level controller (610) configured for communicating with said monitoring system (605) and with said inflatable weir (102), said water level controller controlling inflation or deflation of the inflatable weir, thereby raising or lowering, respectively, water level in the tailrace portion (26) of the hydroelectric dam,
wherein the monitoring system (605) feeds the water level controller (610) with a current cavitation state of the turbine, and
wherein the water level controller (610) inflates the weir (102) when the cavitation state is unsafe cavitation, deflates the weir (102) when the cavitation state is no cavitation, and neither deflates nor inflates the weir when the cavitation state is safe cavitation.

2. The system (600) according to claim 1, wherein the controller (610) and monitoring system (605) are operatively connected to maintain a desired cavitation state and/or maintain a desired power output in the turbine (40), and/or wherein the monitoring system (605) continuously feeds the controller (610) with the cavitation state of the turbine.

3. The system (600) according to claim 1 or 2, wherein monitoring cavitation comprises measuring amplitude of an acoustic signal (710) within a frequency range, and wherein the monitoring system (605) comprises at least one high-frequency sensor attached outside the turbine (40) to measure acoustic signals.

4. The system (600) according to claim 3, wherein monitoring cavitation comprises maintaining a desired cavitation state, and wherein said desired cavitation state comprises a threshold value (720) associated with a number of times amplitude of said acoustic signal (710) is allowed to be exceeded.

5. The system (600) according to any one of claims 1 to 4, wherein the monitoring system (605) comprises measuring at least one of the following operating data values (630): sigma value, turbine efficiency, turbine effective power, turbine reactive power, forebay level, tailrace level, pressure upstream of the turbine, pressure downstream of runners in the draft tube and vibration characteristic values.

6. The system (600) according to any one of claims 1 to 5,

wherein said system further comprises at least one storage tank (106) filled with an amount of fluid sufficient to fully inflate the at least one inflatable weir (102), said at least one storage tank (106) comprising an outlet (107);
wherein said at least one inflatable weir (102) comprises an inlet (136) fluidly connected to the outlet (107) of the at least one storage tank (106); and
wherein said at least one inflatable weir (102) is positioned at a lower position compared to the storage tank (106).

7. The system (600) according to any one of claims 1 to 6, wherein the monitoring system (605) is further configured for maintaining a desired turbine power output.

8. A system (600) for controlling cavitation in a turbine (40) of a hydroelectric dam (10), said hydroelectric dam having a tailrace portion (26) and a downstream waterway (46), the system comprising:

a) at least one storage tank (106) filled with a fluid, said at least one storage tank comprising an outlet (107);
b) at least one inflatable weir (102), said at least one inflatable weir being positioned at a location between the tailrace portion (26) and the downstream waterway (46) of the hydroelectric dam, wherein said at least one inflatable weir (102) comprises an inlet (136) fluidly connected to the outlet (107) of the at least one storage tank (106);
c) a monitoring system (605) configured for monitoring cavitation in said turbine; and
d) a water level controller (610) configured for communicating with said monitoring system (605), with the storage tank (106) and with the inflatable weir (102), said water level controller controlling inflation or deflation of the inflatable weir (102). thereby raising or lowering, respectively, water level in the tailrace portion (26) of the hydroelectric dam;
wherein the monitoring system (605) feeds the water level controller (605) with a current cavitation state of the turbine, and
wherein the water level controller (605) inflates the inflatable weir (102) when the cavitation state is unsafe cavitation, deflates the inflatable weir when the cavitation state is no cavitation, and neither deflates nor inflates the inflatable weir when the cavitation state is safe cavitation.

9. The system (600) of claim 8, further comprising:
a controllable valve (122) positioned between the outlet (107) of the at least one storage tank (106) and the inlet (136) of the at least one inflatable weir (102), the controllable valve (122) being maintained in a closed state during normal functioning of the hydroelectric dam (10);

wherein the controllable valve (122) is configured to be in an open state upon failure of said normal functioning of said hydroelectric dam, and
wherein said open state releases fluid from said at least one storage tank (106) to inflate the at least one inflatable weir (102), thereby retaining water flow in the waterway (46) and maintaining a minimal water level in the tailrace portion (26) of said hydroelectric dam.

10. A method for controlling cavitation in a turbine (602) of a hydroelectric dam (10), the hydroelectric dam having a tailrace portion (26) and a downstream waterway (46), the method comprising:

   using a monitoring system (605) for monitoring cavitation in said turbine; and
   controlling said cavitation by raising or lowering water level in the tailrace portion (26) of the hydroelectric dam, wherein said controlling comprises inflating or deflating an inflatable weir (102) positioned at a location between the tailrace portion (26) and the downstream waterway (46) of said hydroelectric dam (10);
   wherein controlling cavitation comprises inflating the inflatable weir (102) when a cavitation state is unsafe cavitation, deflating the inflatable weir when a cavitation state is no cavitation, and neither deflating nor inflating the inflatable weir when a cavitation state is safe cavitation.

11. The method according to claim 10, further comprising at least one of i) continuously monitoring the cavitation state of the turbine (602) and ii) maintaining a desired power output in the turbine by raising or lowering water level.

12. The method according to claim 10 or 11, wherein monitoring cavitation comprises at least one of i) measuring acoustic signals (710) outside the turbine and ii) measuring amplitude of an acoustic signal within a frequency range.

13. The method according to claim 10, wherein inflating or deflating the weir (102) comprises at least one of activating a controllable pump, activating a valve (122) and injecting air or injecting liquid into the inflatable weir (102).

14. The method according to any one of claims 10 to 13, further comprising monitoring cavitation in said turbine (602) for maintaining a desired power output in the turbine.

15. The method according to any one of claims 10 to 14, further comprising measuring at least one of the following operating data values (630): sigma value, efficiency, effective power, reactive power, forebay level, tailrace level, pressure upstream of the turbine, pressure downstream of runners in the draft tube and vibration characteristic values.

## Patentansprüche

1. System (600) zum Steuern von Kavitation in einer Turbine (40) eines hydroelektrischen Staudamms (10), wobei der hydroelektrische Staudamm einen Unterwasserabschnitt (26) und einen stromabwärts gelegenen Wasserweg (46) aufweist, wobei das System umfasst:

   a) mindestens ein aufblasbares Wehr (102), das an einer Stelle zwischen dem Unterwasserabschnitt (26) des Staudamms (10) und dem stromabwärts gelegenen Wasserweg (46) des Staudamms angeordnet ist;
   b) ein Überwachungssystem (605), das für die Überwachung von Kavitation in der Turbine (40) konfiguriert ist; und
   c) eine Wasserstandssteuerung (610), die so konfiguriert ist, dass sie mit dem Überwachungssystem (605) und mit dem aufblasbaren Wehr (102) kommuniziert, wobei die Wasserstandssteuerung Folgendes steuert Aufblasen oder Entleeren des aufblasbaren Wehrs, wodurch der Wasserstand im Unterwasserabschnitt (26) des Wasserkraftwerksdammes angehoben bzw. abgesenkt wird,
   wobei das Überwachungssystem (605) die Wasserstandssteuerung (610) mit einem aktuellen Kavitationszustand der Turbine speist, und
   wobei die Wasserstandssteuerung (610) das Wehr (102) aufbläst, wenn der Kavitationszustand unsichere Kavitation ist, das Wehr (102) ablässt, wenn der Kavitationszustand keine Kavitation ist, und das Wehr weder ablässt noch aufbläst, wenn der Kavitationszustand sichere Kavitation ist.

2. System (600) nach Anspruch 1, wobei die Steuerung (610) und das Überwachungssystem (605) betriebsmäßig verbunden sind, um einen gewünschten Kavitationszustand und/oder eine gewünschte Leistungsabgabe in der Turbine (40) aufrechtzuerhalten, und/oder wobei das Überwachungssystem (605) die Steuerung (610) kontinuierlich mit dem Kavitationszustand der Turbine speist.

3. System (600) nach Anspruch 1 oder 2, wobei die Überwachung der Kavitation die Messung der Amplitude eines akustischen Signals (710) innerhalb eines Frequenzbereichs umfasst, und wobei das Überwachungssystem (605) mindestens einen Hochfrequenzsensor umfasst, der außerhalb der Turbine (40) angebracht ist, um akustische Signale zu messen.

4. System (600) nach Anspruch 3, wobei das Überwachen der Kavitation das Aufrechterhalten eines gewünschten Kavitationszustandes umfasst, und wobei der gewünschte Kavitationszustand einen Schwellenwert (720) umfasst, der mit einer Anzahl von Überschreitungen der Amplitude des akustischen Signals (710) verbunden ist.

5. System (600) nach einem der Ansprüche 1 bis 4, wobei das Überwachungssystem (605) die Messung mindestens eines der folgenden Betriebsdatenwerte (630) umfasst: Sigma-Wert, Turbinenwirkungsgrad, Turbinenwirkleistung, Turbinenblindleistung, Vorlaufpegel, Nachlaufpegel, Druck stromaufwärts der Turbine, Druck stromabwärts der Laufräder im Saugrohr und Schwingungskennwerte.

6. System (600) gemäß einem der Ansprüche 1 bis 5, wobei das System ferner mindestens einen Vorratstank (106) umfasst, der mit einer Fluidmenge gefüllt ist, die ausreicht, um das mindestens eine aufblasbare Wehr (102) vollständig aufzublasen, wobei der mindestens eine Vorratstank (106) einen Auslass (107) umfasst;

   wobei das mindestens eine aufblasbare Wehr (102) einen Einlass (136) aufweist, der in Fluidverbindung mit dem Auslass (107) des mindestens einen Speichertanks (106) steht; und wobei das mindestens eine aufblasbare Wehr (102) an einer niedrigeren Position als der Speichertank (106) angeordnet ist.

7. System (600) nach einem der Ansprüche 1 bis 6, wobei das Überwachungssystem (605) ferner zur Aufrechterhaltung einer gewünschten Turbinenleistung konfiguriert ist.

8. System (600) zum Steuern von Kavitation in einer Turbine (40) eines hydroelektrischen Staudamms (10), wobei der hydroelektrische Staudamm einen Unterwasserabschnitt (26) und einen stromabwärts gelegenen Wasserweg (46) aufweist, wobei das System umfasst:

   a) mindestens einen mit einer Flüssigkeit gefüllten Vorratstank (106), der einen Auslass (107) aufweist;
   b) mindestens ein aufblasbares Wehr (102), wobei das mindestens eine aufblasbare Wehr an einer Stelle zwischen dem Unterwasserabschnitt (26) und dem stromabwärts gelegenen Wasserweg (46) des hydroelektrischen Staudamms positioniert ist, wobei das mindestens eine aufblasbare Wehr (102) einen Einlass (136) umfasst, der in Fluidverbindung mit dem Auslass (107) des mindestens einen Speichertanks (106) steht;
   c) ein Überwachungssystem (605), das für die Überwachung der Kavitation in der Turbine konfiguriert ist; und
   d) eine Wasserstandssteuerung (610), die so konfiguriert ist, dass sie mit dem Überwachungssystem (605), mit dem Speichertank (106) und mit dem aufblasbaren Wehr (102) kommuniziert, wobei der Wasserstand Steuergerät zur Steuerung des Aufblasens oder Ablassens des aufblasbaren Wehrs (102), Dadurch wird der Wasserstand im Unterwasserbereich (26) des Staudamms angehoben bzw. abgesenkt;
   wobei das Überwachungssystem (605) den Wasserstandsregler (605) mit einem aktuellen Kavitationszustand der Turbine speist, und wobei der Wasserstand Controller (605) bläst das aufblasbare Wehr (102) auf, wenn die Kavitation Zustand unsichere Kavitation ist, entlüftet das aufblasbare Wehr, wenn der Kavitationszustand keine Kavitation ist, und das aufblasbare Wehr weder entleert noch aufbläst, wenn der Kavitationszustand eine sichere Kavitation ist.

9. System (600) gemäß Anspruch 8, das ferner umfasst:

   ein steuerbares Ventil (122), das zwischen dem Auslass (107) des mindestens einen Speicherbehälters (106) und dem Einlass (136) des mindestens einen aufblasbaren Wehrs (102) angeordnet ist, wobei das steuerbare Ventil (122) während des normalen Betriebs des hydroelektrischen Damms (10) in einem geschlossenen Zustand gehalten wird;
   wobei das steuerbare Ventil (122) so konfiguriert ist, dass es sich in einem offenen Zustand befindet, wenn der normale Betrieb des hydroelektrischen Damms ausfällt, und wobei der offene Zustand Fluid aus dem mindestens einen Vorratstank (106) freisetzt, um das mindestens eine aufblasbare Wehr (102) aufzublasen, wodurch die Wasserströmung im Wasserweg (46) zurückgehalten und ein minimaler Wasserstand im Unterwasserabschnitt (26) des hydroelektrischen Damms aufrechterhalten wird.

10. Verfahren zum Steuern von Kavitation in einer Turbine (602) eines hydroelektrischen Staudamms (10), wobei der hydroelektrische Staudamm einen Unterwasserabschnitt (26) und einen stromabwärts gelegenen Wasserweg (46) aufweist, wobei das Verfahren umfasst:

   Verwendung eines Überwachungssystems (605) zur Überwachung der Kavitation in der Turbine; und

Steuern der Kavitation durch Anheben oder Absenken des Wasserspiegels im Unterwasserabschnitt (26) des hydroelektrischen Damms, wobei das Steuern das Aufblasen oder Ablassen eines aufblasbaren Wehrs (102) umfasst, das an einer Stelle zwischen dem Unterwasserabschnitt (26) und dem stromabwärts gelegenen Wasserweg (46) des hydroelektrischen Damms (10) angeordnet ist;

wobei die Steuerung der Kavitation das Aufblasen des aufblasbaren Wehrs (102) umfasst, wenn ein Kavitationszustand unsichere Kavitation ist, das Ablassen des aufblasbaren Wehrs, wenn ein Kavitationszustand keine Kavitation ist, und weder das Ablassen noch das Aufblasen des aufblasbaren Wehrs, wenn ein Kavitationszustand sichere Kavitation ist.

11. Verfahren nach Anspruch 10, das ferner mindestens einen der folgenden Schritte umfasst: i) kontinuierliche Überwachung des Kavitationszustands der Turbine (602) und ii) Aufrechterhaltung einer gewünschten Leistungsabgabe in der Turbine durch Anheben oder Absenken des Wasserstands.

12. Verfahren nach Anspruch 10 oder 11, wobei die Überwachung der Kavitation mindestens einen der folgenden Schritte umfasst: i) Messen akustischer Signale (710) außerhalb der Turbine und ii) Messen der Amplitude eines akustischen Signals innerhalb eines Frequenzbereichs.

13. Verfahren nach Anspruch 10, wobei das Aufblasen oder Entleeren des Wehrs (102) mindestens eines der folgenden Elemente umfasst: Aktivieren einer steuerbaren Pumpe, Aktivieren eines Ventils (122) und Einspritzen von Luft oder Einspritzen von Flüssigkeit in das aufblasbare Wehr (102).

14. Verfahren nach einem der Ansprüche 10 bis 13, das ferner die Überwachung der Kavitation in der Turbine (602) umfasst, um eine gewünschte Leistungsabgabe in der Turbine aufrechtzuerhalten.

15. Verfahren nach einem der Ansprüche 10 bis 14, wobei mindestens einer der folgenden Betriebsdatenwerte (630) gemessen wird: Sigma-Wert, Wirkungsgrad, Wirkleistung, Blindleistung, Vorlaufpegel, Nachlaufpegel, Druck stromaufwärts der Turbine, Druck stromabwärts der Laufräder im Saugrohr und Schwingungskennwerte.

**Revendications**

1. Système (600) pour contrôler la cavitation dans une turbine (40) d'un barrage hydroélectrique (10), ledit barrage hydroélectrique comportant une partie de canal de fuite (26) et une voie d'eau en aval (46), ledit système comprenant:

   a) au moins un déversoir gonflable (102) positionné à un emplacement entre la partie de canal de fuite (26) du barrage hydroélectrique (10) et la voie d'eau en aval (46) dudit barrage;
   b) un système de surveillance (605) configuré pour surveiller la cavitation dans ladite turbine (40); et
   c) un régulateur de niveau d'eau (610) configuré pour communiquer avec ledit système de surveillance (605) et avec ledit déversoir gonflable (102), ledit régulateur de niveau d'eau contrôlant le gonflage ou le dégonflage du déversoir gonflable, de manière à élever ou abaisser, respectivement, un niveau d'eau dans la partie de canal de fuite (26) du barrage hydroélectrique,
   dans lequel le système de surveillance (605) transmet au régulateur de niveau d'eau (610) un état actuel de cavitation de la turbine, et
   dans lequel le régulateur de niveau d'eau (610) gonfle le déversoir (102) lorsque l'état de cavitation est une cavitation dangereuse, dégonfle le déversoir (102) lorsque l'état de cavitation est une absence de cavitation, et ne gonfle ni ne dégonfle le déversoir lorsque l'état de cavitation est une cavitation sûre.

2. Système (600) selon la revendication 1, dans lequel le régulateur (610) et le système de surveillance (605) sont fonctionnellement reliés de manière à maintenir un état de cavitation souhaité et/ou à maintenir une puissance de sortie souhaitée de la turbine (40), et/ou dans lequel le système de surveillance (605) transmet en continu au régulateur (610) l'état de cavitation de la turbine.

3. Système (600) selon la revendication 1 ou 2, dans lequel la surveillance de la cavitation comprend la mesure d'une amplitude d'un signal acoustique (710) dans une plage de fréquences, et dans lequel le système de surveillance (605) comprend au moins un capteur haute fréquence fixé à l'extérieur de la turbine (40) pour mesurer les signaux acoustiques.

4. Système (600) selon la revendication 3, dans lequel la surveillance de la cavitation comprend le maintien d'un état de cavitation souhaité, et dans lequel ledit état de cavitation souhaité comprend une valeur seuil (720) associée à un nombre de fois où l'amplitude dudit signal acoustique (710) est permise d'être dépassée (710).

5. Système (600) selon l'une quelconque des revendications 1 à 4, dans lequel le système de surveillance (605) comprend la mesure d'au moins l'une des valeurs de données de fonctionnement (630) suivantes: valeur sigma, efficacité de la turbine, puissance active de la turbine, puissance réactive de la turbine, niveau du bief amont, niveau du bief aval, pression en amont de la turbine, pression en aval des roues dans le tube d'aspiration et valeurs caractéristiques de vibrations.

6. Système (600) selon l'une quelconque des revendications 1 à 5,

dans lequel ledit système comprend en outre au moins un réservoir de stockage (106) rempli d'une quantité de fluide suffisante pour gonfler complètement le au moins un déversoir gonflable (102), ledit au moins un réservoir de stockage (106) comprenant une sortie (107);
dans lequel ledit au moins un déversoir gonflable (102) comprend une entrée (136) reliée en communication fluide avec la sortie (107) dudit au moins un réservoir de stockage (106); et
dans lequel ledit au moins un déversoir gonflable (102) est positionné à une position inférieure par rapport au réservoir de stockage (106).

7. Système (600) selon l'une quelconque des revendications 1 à 6, dans lequel le système de surveillance (605) est en outre configuré pour maintenir une puissance de sortie souhaitée de la turbine.

8. Système (600) pour contrôler la cavitation dans une turbine (40) d'un barrage hydroélectrique (10), ledit barrage hydroélectrique comportant une partie de canal de fuite (26) et une voie d'eau en aval (46), ledit système comprenant:

a) au moins un réservoir de stockage (106) rempli d'un fluide, ledit au moins un réservoir de stockage comprenant une sortie (107);
b) au moins un déversoir gonflable (102), ledit au moins un déversoir gonflable étant positionné à un emplacement entre la partie de canal de fuite (26) et la voie d'eau en aval (46) du barrage hydroélectrique, dans lequel ledit au moins un déversoir gonflable (102) comprend une entrée (136) reliée en communication fluide avec la sortie (107) dudit au moins un réservoir de stockage (106);
c) un système de surveillance (605) configuré pour surveiller la cavitation dans ladite turbine; et
d) un régulateur de niveau d'eau (610) configuré pour communiquer avec ledit système de surveillance (605), avec ledit réservoir de stockage (106) et avec ledit déversoir gonflable (102), ledit régulateur de niveau d'eau contrôlant le gonflage ou le dégonflage du déversoir gonflable (102), augmentant ou abaissant ainsi, respectivement, un niveau d'eau dans la partie de canal de fuite (26) du barrage hydroélectrique;
dans lequel le système de surveillance (605) transmet au régulateur de niveau d'eau (605) un état actuel de cavitation de la turbine, et
dans lequel le régulateur de niveau d'eau (605) gonfle le déversoir gonflable (102) lorsque l'état de cavitation est une cavitation dangereuse, dégonfle le déversoir gonflable lorsque l'état de fonctionnement est une absence de cavitation, et ne dégonfle ni ne gonfle le déversoir gonflable lorsque l'état de fonctionnement est une cavitation sûre.

9. Système (600) selon la revendication 8, comprenant en outre:

une vanne commandable (122) positionnée entre la sortie (107) dudit au moins un réservoir de stockage (106) et l'entrée (136) dudit au moins un déversoir gonflable (102), ladite vanne commandable (122) étant maintenue dans un état fermé pendant un fonctionnement normal du barrage hydroélectrique (10);
dans lequel ladite vanne commandable (122) est configurée pour être en un état ouvert en cas de défaillance dudit fonctionnement normal dudit barrage hydroélectrique, et
dans lequel ledit état ouvert libère le fluide dudit au moins un réservoir de stockage (106) pour gonfler le au moins un déversoir gonflable (102), retenant ainsi un écoulement d'eau dans la voie d'eau en aval (46) et maintenant un niveau d'eau minimal dans la partie de canal de fuite (26) dudit barrage hydroélectrique.

10. Procédé pour contrôler la cavitation dans une turbine (602) d'un barrage hydroélectrique (10), le barrage hydroélectrique comportant une partie de canal de fuite (26) et une voie d'eau en aval (46), le procédé comprenant:

l'utilisation d'un système de surveillance (605) pour surveiller la cavitation dans ladite turbine; et
le contrôle de ladite cavitation en augmentant ou en diminuant un niveau d'eau dans la partie de canal de fuite (26) du barrage hydroélectrique, dans lequel ledit contrôle comprend le gonflage ou le dégonflage d'un déversoir gonflable (102) positionné à un emplacement entre la partie de canal de fuite (26) et la voie d'eau en aval (46) dudit barrage hydroélectrique (10);
dans lequel le contrôle de la cavitation comprend le gonflage du déversoir gonflable (102) lorsqu'un état de cavitation est une cavitation dangereuse, le dégonflage du déversoir gonflable lorsqu'un état de cavitation est une absence de cavitation, et ni le dégonflage ni le gonflage du déversoir gonflable lorsqu'un état de cavitation est une cavitation sûre.

11. Procédé selon la revendication 10, comprenant en outre au moins l'une des étapes suivantes: i) la surveillance continue de l'état de cavitation de la turbine (602); et ii) le maintien d'une puissance de sortie souhaitée de la turbine en élevant ou en abaissant le niveau d'eau.

12. Procédé selon la revendication 10 ou 11, dans lequel la surveillance de la cavitation comprend au moins l'une des étapes suivantes: i) la mesure de signaux acoustiques (710) à l'extérieur de la turbine; et ii) la mesure de l'amplitude d'un signal acoustique dans une plage de fréquences.

13. Procédé selon la revendication 10, dans lequel le gonflage ou le dégonflage du déversoir (102) comprend au moins l'une des opérations suivantes: l'activation d'une pompe contrôlable, l'activation d'une vanne (122) et l'injection d'air ou l'injection de liquide dans le déversoir gonflable (102).

14. Procédé selon l'une quelconque des revendications 10 à 13, comprenant en outre la surveillance de la cavitation dans ladite turbine (602) afin de maintenir une puissance de sortie souhaitée dans la turbine.

15. Procédé selon l'une quelconque des revendications 10 à 14, comprenant en outre la mesure d'au moins l'une des valeurs de données de fonctionnement suivantes (630) : valeur sigma, efficacité, puissance active, puissance réactive, niveau du bief amont, niveau du bief aval, pression en amont de la turbine, pression en aval des roues dans le tube d'aspiration et valeurs caractéristiques de vibrations.

**FIGURE 1**

**(Prior Art)**

**FIGURE 2**

**(Prior Art)**

**FIGURE 3**

**FIGURE 4**

200

202

Providing a storage tank filled with a fluid and fluidly connected to an inflatable weir

204

Actively maintaining a control valve in a closed position

206

Actuating the control valve to the open position upon failure of the normal functioning condition for conveying the fluid from the storage tank to the inflatable weir

**FIGURE 5**

EP 4 162 113 B1

**FIGURE 6**

23

**FIGURE 7**

START HERE

If Event Z = True
Then Sel = 00

State 0
DO NOTHING

00

If Event Y = True
Then Sel = 01

If Event X = True
Then Sel = 10

If Event Z = True
Then Sel = 00

If Event Z = True
Then Sel = 00

State 1
DEFLATE

01

State 2
INFLATE

10

If Event Y = True
Then Sel = 01

If Event Y = True
Then Sel = 01

If Event X = True
Then Sel = 10

If Event X = True
Then Sel = 10

**FIGURE 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9217233 B

**Non-patent literature cited in the description**

- **NECKER J. et al.** Cavitation monitoring in hydraulic turbines. Voith Hydro Inc.